(19) **Europäisches Patentamt European Patent Office Office européen des brevets**

(11) **EP 4 668 641 A1**

(12) **EUROPEAN PATENT APPLICATION**
published in accordance with Art. 153(4) EPC

(43) Date of publication:
24.12.2025 Bulletin 2025/52

(21) Application number: 24728848.3

(22) Date of filing: 15.02.2024

(51) International Patent Classification (IPC):
H04L 5/00 (2006.01)      H04W 76/27 (2018.01)
H04W 74/08 (2024.01)     H04B 17/318 (2015.01)
H04W 64/00 (2009.01)

(52) Cooperative Patent Classification (CPC):
H04B 17/318; H04L 5/00; H04W 64/00;
H04W 74/08; H04W 76/27

(86) International application number:
PCT/KR2024/095152

(87) International publication number:
WO 2024/172534 (22.08.2024 Gazette 2024/34)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 16.02.2023  US 202363446326 P

(71) Applicant: LG ELECTRONICS INC.
Yeongdeungpo-gu
Seoul 07336 (KR)

(72) Inventors:
• HWANG, Seunggye
  Seoul 06772 (KR)
• KO, Hyunsoo
  Seoul 06772 (KR)
• SHIM, Jaenam
  Seoul 06772 (KR)

(74) Representative: Plasseraud IP
104 Rue de Richelieu
CS92104
75080 Paris Cedex 02 (FR)

(54) **METHOD AND DEVICE FOR TRANSMITTING AND RECEIVING WIRELESS SIGNAL IN WIRELESS COMMUNICATION SYSTEM**

(57) According to at least one of the embodiments disclosed in the present specification, a method of transmitting a sounding reference signal (SRS) by a user equipment (UE) in a wireless communication system includes: receiving an SRS configuration supporting multiple cells for positioning in a radio resource control (RRC) inactive state; transmitting an SRS in the RRC inactive state based on the SRS configuration supporting the multiple cells while a timing advance (TA) is valid; and performing an update procedure for the SRS configuration supporting the multiple cells based on that the TA is no longer valid. The UE may perform the update procedure while maintaining the RRC inactive state.

**FIG. 16**

## Description

### TECHNICAL FIELD

The present disclosure relates to a wireless communication system, and more particularly, to a method and apparatus for transmitting and receiving a wireless signal.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

### DISCLOSURE

### TECHNICAL PROBLEM

An object of the disclosure is to provide a method and device for transmitting or receiving signals more accurately and efficiently in a wireless communication system.

The object of the disclosure is not limited to this, and other objects may be inferred from the disclosed embodiments.

### TECHNICAL SOLUTION

In an aspect of the present disclosure, provided herein is a method of transmitting a sounding reference signal (SRS) by a user equipment (UE) in a wireless communication system. The method may include: receiving an SRS configuration supporting multiple cells for positioning in a radio resource control (RRC) inactive state; transmitting an SRS in the RRC inactive state based on the SRS configuration supporting the multiple cells while a timing advance (TA) is valid; and performing an update procedure for the SRS configuration supporting the multiple cells based on that the TA is no longer valid. The UE may perform the update procedure while maintaining the RRC inactive state.

The update procedure may be a random access procedure triggered based on that the TA is invalid.

At least one downlink signal received during the random access procedure may include information regarding an updated SRS configuration.

The UE may maintain the RRC inactive state without returning to an RRC connected state after completion of the random access procedure.

The SRS configuration supporting the multiple cells may be received via an RRC message instructing a transition from an RRC connected state to the RRC inactive state.

The RRC message may include information regarding TA validity determination.

Based on that a first condition among a plurality of conditions related to TA validity determination is not satisfied and that a second condition is satisfied, the UE may perform the update procedure without stopping the SRS transmission.

Based on that both the first condition and the second condition are not satisfied, the UE may stop the SRS transmission and perform the update procedure.

The first condition and the second condition may be different timer values or different reference signal received power (RSRP) thresholds.

In another aspect of the present disclosure, provided herein is a processor-readable recording medium having recorded thereon a program for executing the SRS transmission method described above.

In another aspect of the present disclosure, provided herein is a device for wireless communication. The device may include: a memory configured to store instructions; and a processor configured to perform operations by executing the instructions. The operations of the processor may include: receiving an SRS configuration supporting multiple cells for positioning in an RRC inactive state; transmitting an SRS in the RRC inactive state based on the SRS configuration supporting the multiple cells while a TA is valid; and performing an update procedure for the SRS configuration supporting the multiple cells based on that the TA is no longer valid. The UE may perform the update procedure while maintaining the RRC inactive state.

The device may further include a transceiver.

The device may be a UE operating in a wireless communication system.

The device may be a processing device configured to control a UE operating in a wireless communication system.

In another aspect of the present disclosure, provided herein is a method of receiving an SRS by at least one base station (BS) in a wireless communication system. The method may include transmitting an SRS configuration supporting multiple cells for UE positioning in an RRC inactive state; receiving an SRS from a UE operating in the RRC inactive state based on the SRS configuration supporting the multiple cells while a TA of the UE is valid; and performing an update procedure for the SRS configuration supporting the multiple cells with the UE based on that the TA is no longer valid. The at least one BS may perform the update procedure while maintaining the RRC inactive state for the UE.

In another aspect of the present disclosure, provided herein is a processor-readable recording medium having recorded thereon a program for executing the SRS reception method described above.

In a further aspect of the present disclosure, provided herein is a device having at least one BS. The device may include: at least one memory configured to store instructions; and at least one processor configured to perform operations by executing the instructions. The operations of the at least one processor may include: transmitting an SRS configuration supporting multiple cells for UE positioning in an RRC inactive state; receiving an SRS from a UE operating in the RRC inactive state based on the SRS configuration supporting the multiple cells while a TA of the UE is valid; and performing an update procedure for the SRS configuration supporting the multiple cells with the UE based on that the TA is no longer valid. The device may perform the update procedure while maintaining the RRC inactive state for the UE.

ADVANTAGEOUS EFFECTS

According to an embodiment of the present disclosure, a signal can be more accurately and efficiently transmitted or received in a wireless communication system.

The effect of the disclosure is not limited to this, and other advantageous effects may be inferred from the disclosed embodiments.

BRIEF DESCRIPTION OF THE DRAWINGS

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot

FIG. 5 illustrates an exemplary physical downlink shared channel (PDSCH) reception and acknowledgement/negative acknowledgement (ACK/NACK) transmission process.

FIG. 6 illustrates an exemplary physical uplink shared channel (PUSCH) transmission process.

FIG. 7 illustrates an example of setting a positioning protocol.

FIG. 8 illustrates an example of OTDOA.

FIG. 9 illustrates an example of Multi RTT.

FIG. 10 illustrates a procedure for operating a network node (e.g., an upper node of a user equipment (UE), location management function (LMF), etc.) according to an embodiment.

FIG. 11 illustrates a UE operation procedure for performing positioning measurement.

FIG. 12 illustrates various integrated sensing and communication (ISAC) environments.

FIG. 13 illustrates an example of a sounding reference signal for positioning (SRS-p) configuration for multiple cells.

FIG. 14 illustrates an example of operations related to an SRS-p configuration for multiple cells according to one embodiment."

FIG. 15 is a diagram for explaining operations of a UE and network in a wireless communication system according to an embodiment.

FIG. 16 illustrates a flowchart of a method by which a UE transmits an SRS according to an embodiment.

FIG. 17 illustrates a flowchart of a method by which a BS receives an SRS according to an embodiment.

FIGS. 18 to 21 illustrate an example of a communication system 1 and wireless devices applicable to the present disclosure.

DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In an embodiment of the present disclosure, for simplicity, this technology will be referred to as NR (New Radio or New RAT).

In this specification, the term "base station" ma be replaced with terms such as fixed station, Node B, gNode B (gNB), access point (AP), cell, transmission and reception point (TRP), etc. The term "relay" may be replaced with terms such as relay node (RN), relay station, etc. The term "terminal" may be replaced with terms such as user equipment (UE), mobile station (MS), mobile subscriber station (MSS), subscriber station (SS), etc.

For the sake of clarity, 3GPP NR is mainly described, but the technical idea of the present disclosure is not limited thereto.

For the background art relevant to the present disclosure, the definitions of terms, and abbreviations, the following documents may be incorporated by reference.

- 38.211: Physical channels and modulation
- 38.212: Multiplexing and channel coding
- 38.213: Physical layer procedures for control
- 38.214: Physical layer procedures for data
- 38.215: Physical layer measurements
- 38.300: NR and NG-RAN Overall Description
- 38.304: User Equipment (UE) procedures in idle mode and in RRC Inactive state
- 38.321 Medium Access Control (MAC) protocol specification
- 38.331: Radio Resource Control (RRC) protocol specification
- 37.213: Introduction of channel access procedures to unlicensed spectrum for NR-based access
- 36.355: LTE Positioning Protocol
- 37.355: LTE Positioning Protocol

Terms and Abbreviations

- 5GC: 5G Core Network
- 5GS: 5G System
- AoA: Angle of Arrival
- AP: Access Point
- CID: Cell ID
- E-CID: Enhanced Cell ID
- GNSS: Global Navigation Satellite System
- GPS: Global Positioning System
- LCS: LoCation Service
- LMF: Location Management Function
- LPP: LTE Positioning Protocol
- MO-LR: Mobile Originated Location Request
- MT-LR: Mobile Terminated Location Request

- NRPPa: NR Positioning Protocol A
- OTDOA: Observed Time Difference Of Arrival
- PDU: Protocol Data Unit
- PRS: Positioning Reference Signal
- RRM: Radio Resource Management
- RSSI: Received Signal Strength Indicator
- RSTD: Reference Signal Time Difference
- ToA: Time of Arrival
- TP: Transmission Point
- TRP: Transmission and Reception Point
- UE: User Equipment
- SS: Search Space
- CSS: Common Search Space
- USS: UE-specific Search Space
- PDCCH: Physical Downlink Control Channel
- PDSCH: Physical Downlink Shared Channel;
- PUCCH: Physical Uplink Control Channel;
- PUSCH: Physical Uplink Shared Channel;
- DCI: Downlink Control Information
- UCI: Uplink Control Information
- SI: System Information
- SIB: System Information Block
- MIB: Master Information Block
- RRC: Radio Resource Control
- DRX: Discontinuous Reception
- RNTI: Radio Network Temporary Identifier
- CSI: Channel state information
- PCell: Primary Cell
- SCell: Secondary Cell
- PSCell: Primary SCG (Secondary Cell Group) Cell
- CA: Carrier Aggregation
- WUS: Wake up Signal
- TX: Transmitter
- RX: Receiver
- RSTD: Reference Signal Time Difference
- RS: Reference Signal
- PRS: Positioning Reference Signal
- SRS: Sounding Reference Signal

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

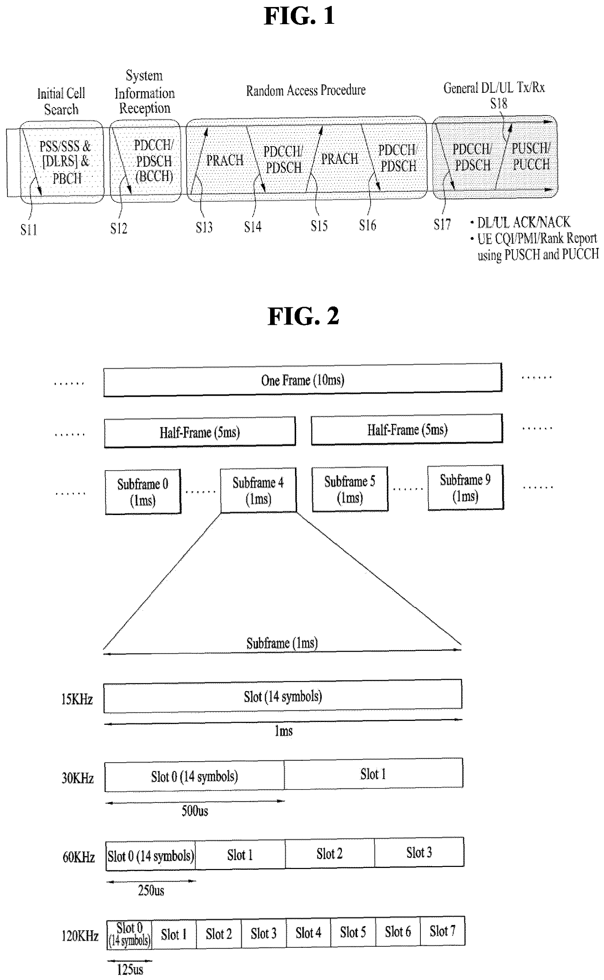

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| $N^{slot}_{symb}$: Number of symbols in a slot<br>$N^{frame,u}_{slot}$: Number of slots in a frame<br>$N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

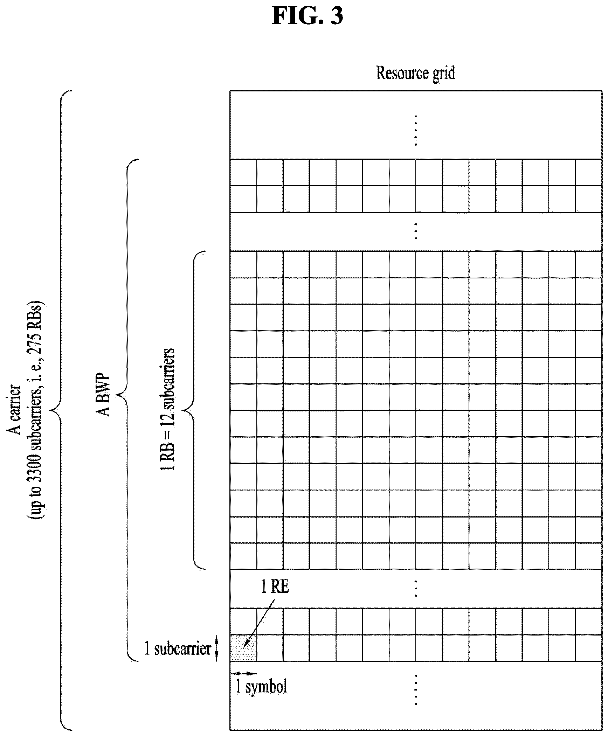

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

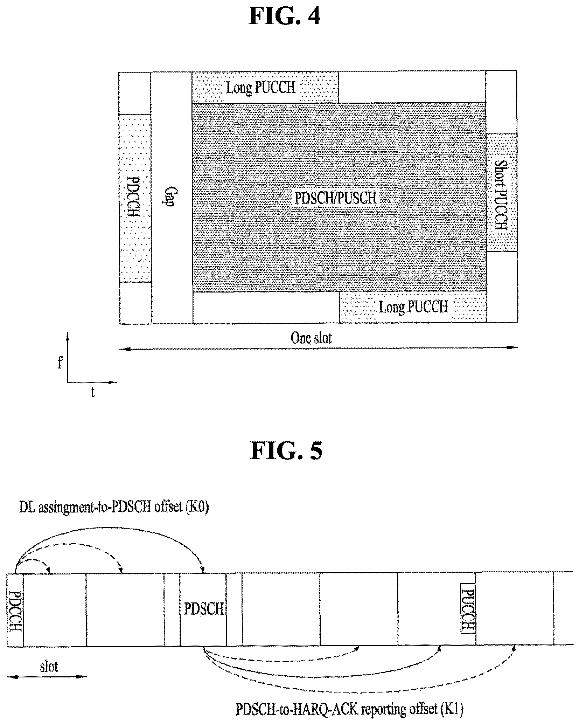

FIG. 4 illustrates an example of mapping physical channels in a slot. In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

FIG. 5 illustrates an exemplary PDSCH reception and ACK/NACK transmission process. Referring to FIG. 5, the UE may detect a PDCCH in slot #n. The PDCCH includes DL scheduling information (e.g., DCI format 1_0 or DCI format 1_1), and indicates a DL assignment-to-PDSCH offset, K0 and a PDSCH-HARQ-ACK reporting offset, K1. After receiving a PDSCH in slot #(n+K0) according to the scheduling information of slot #n, the UE may transmit UCI on a PUCCH in slot #(n+K1). The UCI may include an HARQ-ACK response to the PDSCH. In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

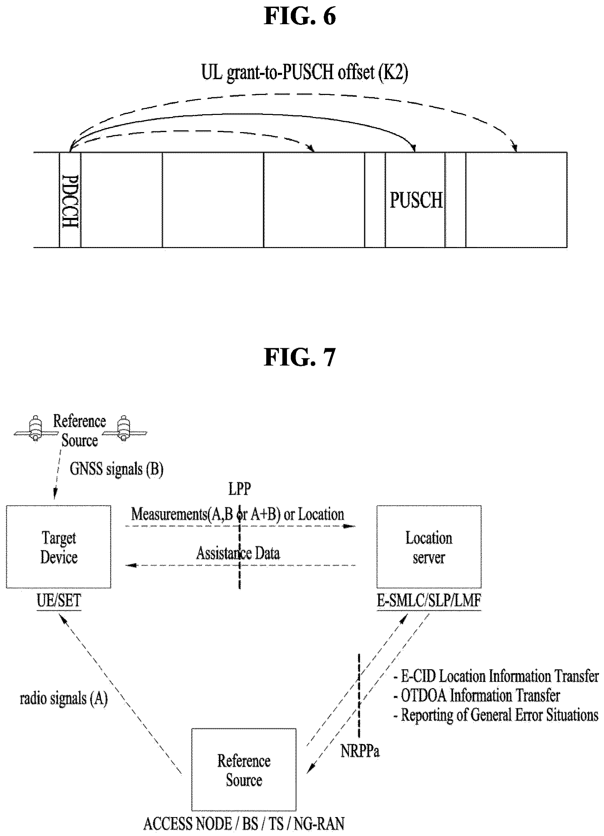

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). The UE may then transmit a PUSCH in slot #(n+K2) according to the scheduling information in slot #n. The PUSCH includes a UL-SCH TB.

## Positioning

Positioning may refer to determining the geographical position and/or velocity of the UE based on measurement of radio signals. Location information may be requested by and reported to a client (e.g., an application) associated with to the UE. The location information may also be requested by a client within or connected to a core network. The location information may be reported in standard formats such as formats for cell-based or geographical coordinates, together with estimated errors of the position and velocity of the UE and/or a positioning method used for positioning.

FIG. 7 is a diagram illustrating an exemplary positioning protocol configuration for positioning a UE, to which various embodiments are applicable.

Referring to FIG. 7, an LTE positioning protocol (LPP) may be used as a point-to-point protocol between a location server (E-SMLC and/or SLP and/or LMF) and a target device (UE and/or SET), for positioning the target device using position-related measurements obtained from one or more reference resources. The target device and the location server may exchange measurements and/or location information based on signal A and/or signal B over the LPP.

NRPPa may be used for information exchange between a reference source (access node and/or BS and/or TP and/or NG-RAN node) and the location server.

The NRPPa protocol may provide the following functions.

- E-CID Location Information Transfer. This function allows the reference source to exchange location information with the LMF for the purpose of E-CID positioning.
- OTDOA Information Transfer. This function allows the reference source to exchange information with the LMF for the purpose of OTDOA positioning.
- Reporting of General Error Situations. This function allows reporting of general error situations, for which function-specific error messages have not been defined.

Positioning methods supported in the NG-RAN may include a GNSS, an OTDOA, an E-CID, barometric sensor positioning, WLAN positioning, Bluetooth positioning, a TBS, uplink time difference of arrival (UTDOA) etc. Although any one of the positioning methods may be used for UE positioning, two or more positioning methods may be used for UE positioning.

OTDOA (Observed Time Difference of Arrival)

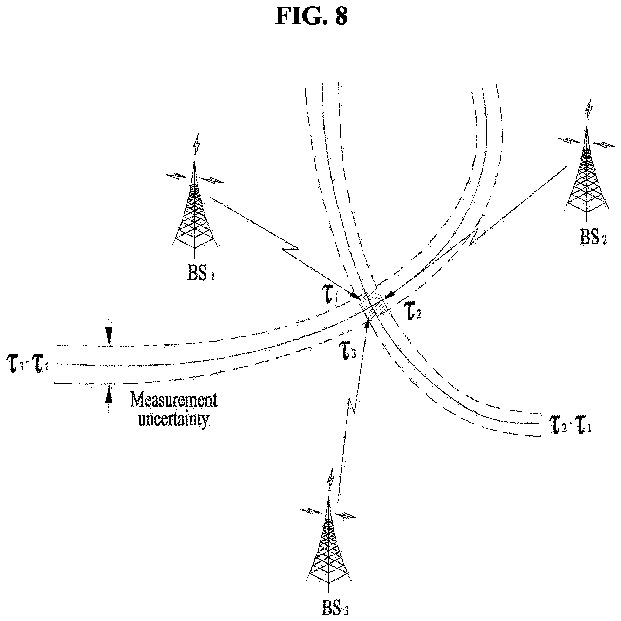

FIG. 8 is a diagram illustrating an observed time difference of arrival (OTDOA) positioning method, to which various embodiments are applicable;

The OTDOA positioning method uses time measured for DL signals received from multiple TPs including an eNB, an ng-eNB, and a PRS-only TP by the UE. The UE measures time of received DL signals using location assistance data received from a location server. The position of the UE may be determined based on such a measurement result and geographical coordinates of neighboring TPs.

The UE connected to the gNB may request measurement gaps to perform OTDOA measurement from a TP. If the UE is not aware of an SFN of at least one TP in OTDOA assistance data, the UE may use autonomous gaps to obtain an SFN of an OTDOA reference cell prior to requesting measurement gaps for performing reference signal time difference (RSTD) measurement.

Here, the RSTD may be defined as the smallest relative time difference between two subframe boundaries received from a reference cell and a measurement cell. That is, the RSTD may be calculated as the relative time difference between the start time of a subframe received from the measurement cell and the start time of a subframe from the reference cell that is closest to the subframe received from the measurement cell. The reference cell may be selected by the UE.

For accurate OTDOA measurement, it is necessary to measure time of arrival (ToA) of signals received from geographically distributed three or more TPs or BSs. For example, ToA for each of TP 1, TP 2, and TP 3 may be measured, and RSTD for TP 1 and TP 2, RSTD for TP 2 and TP 3, and RSTD for TP 3 and TP 1 are calculated based on three ToA values. A geometric hyperbola is determined based on the calculated RSTD values and a point at which curves of the hyperbola cross may be estimated as the position of the UE. In this case, accuracy and/or uncertainty for each ToA measurement may occur and the estimated position of the UE may be known as a specific range according to measurement uncertainty.

For example, RSTD for two TPs may be calculated based on Equation 1 below.

[Equation 1]

$$RSTDi_{,1} = \frac{\sqrt{(x_t - x_i)^2 + (y_t - y_i)^2}}{c} - \frac{\sqrt{(x_t - x_1)^2 + (y_t - y_1)^2}}{c} + (T_i - T_1) + (n_i - n_1)$$

In Equation 1, c is the speed of light, $\{x_t, y_t\}$ are (unknown) coordinates of a target UE, $\{x_i, y_i\}$ are (known) coordinates of a TP, and $\{x_1, y_1\}$ are coordinates of a reference TP (or another TP). Here, $(T_i - T_1)$ is a transmission time offset between two TPs, referred to as "real time differences" (RTDs), and $n_i$ and $n_l$ are UE ToA measurement error values.

E-CID (Enhanced Cell ID)

In a cell ID (CID) positioning method, the position of the UE may be measured based on geographical information of a serving ng-eNB, a serving gNB, and/or a serving cell of the UE. For example, the geographical information of the serving ng-eNB, the serving gNB, and/or the serving cell may be acquired by paging, registration, etc.

The E-CID positioning method may use additional UE measurement and/or NG-RAN radio resources in order to improve UE location estimation in addition to the CID positioning method. Although the E-CID positioning method partially may utilize the same measurement methods as a measurement control system on an RRC protocol, additional measurement only for UE location measurement is not generally performed. In other words, an additional measurement configuration or measurement control message may not be provided for UE location measurement. The UE does not expect that an additional measurement operation only for location measurement will be requested and the UE may report a measurement value obtained by generally measurable methods.

For example, the serving gNB may implement the E-CID positioning method using an E-UTRA measurement value provided by the UE.

Measurement elements usable for E-CID positioning may be, for example, as follows.

UE measurement: E-UTRA reference signal received power (RSRP), E-UTRA reference signal received quality (RSRQ), UE E-UTRA reception (Rx)-transmission (Tx) time difference, GERAN/WLAN reference signal strength indication (RSSI), UTRAN common pilot channel (CPICH) received signal code power (RSCP), and/or UTRAN CPICH Ec/Io

E-UTRAN measurement: ng-eNB Rx-Tx time difference, timing advance ($T_{ADV}$), and/or AoA

Here, $T_{ADV}$ may be divided into Type 1 and Type 2 as follows.

$$\text{T}_{ADV} \text{ Type } 1 = (\text{ng-eNB Rx-Tx time difference}) + (\text{UE E-UTRA Rx-Tx time difference})$$

$$\text{T}_{ADV} \text{ Type } 2 = \text{ng-eNB Rx-Tx time difference}$$

AoA may be used to measure the direction of the UE. AoA is defined as the estimated angle of the UE counterclockwise from the eNB/TP. In this case, a geographical reference direction may be north. The eNB/TP may use a UL signal such as an SRS and/or a DMRS for AoA measurement. The accuracy of measurement of AoA increases as the arrangement of an antenna array increases. When antenna arrays are arranged at the same interval, signals received at adjacent antenna elements may have constant phase rotate.

UTDOA (Uplink Time Difference of Arrival)

UTDOA is a method of determining the location of a UE by estimating the arrival time of the SRS. When calculating the estimated SRS arrival time, the location of the UE can be estimated through an arrival time difference with another cell (or base station/TP) by using the serving cell as a reference cell. To implement UTDOA, the E-SMLC may indicate a serving cell of the target UE in order to instruct the target UE to transmit SRS. In addition, E-SMLC can provide configuration such as periodic/aperiodic SRS, bandwidth and frequency/group/sequence hopping.

Multi RTT (round trip time)

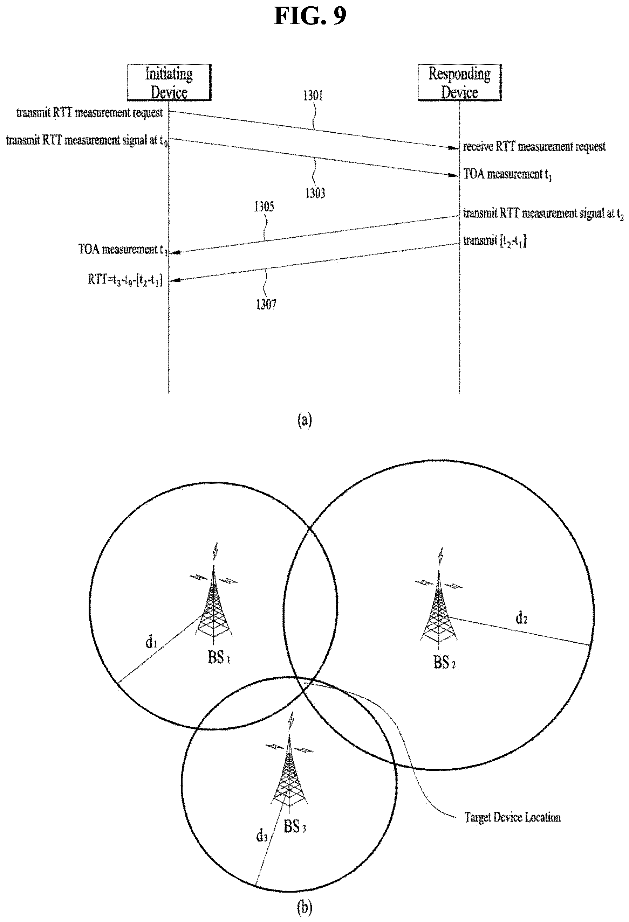

FIG. 9 is a diagram illustrating an exemplary multi-round trip time (multi-RTT) positioning method to which various embodiments are applicable.

Referring to FIG. 9(a), an exemplary RTT procedure is illustrated, in which an initiating device and a responding device perform ToA measurements, and the responding device provides ToA measurements to the initiating device, for RTT measurement (calculation). The initiating device may be a TRP and/or a UE, and the responding device may be a UE and/or a TRP.

The initiating device may transmit an RTT measurement request, and the responding device may receive the RTT measurement request (1301).

The initiating device may transmit an RTT measurement signal at $t_0$ and the responding device may acquire a ToA measurement t1(1303).

The responding device may transmit an RTT measurement signal at t2 and the initiating device may acquire a ToA measurement t3 (1305).

The responding device may transmit information about [t2-t1], and the initiating device may receive the information and calculate an RTT by Equation 2 (1307). The information may be transmitted and received based on a separate signal or in the RTT measurement signal (1305).

[Equation 2]

$$RTT = t_3 - t_0 - [t_2 - t_1]$$

Referring to FIG. 9(b), an RTT may correspond to a double-range measurement between two devices. Positioning estimation may be performed from the corresponding information, and multilateration may be used for the positioning estimation. $d_1$, $d_2$, and $d_3$ may be determined based on the measured RTT, and the location of a target device may be determined to be the intersection of the circumferences of circles with radiuses of $d_1$, $d_2$, and $d_3$, in which $BS_1$, $BS_2$, and $BS_3$ (or TRPs) are centered, respectively.

NG-RAN positioning architecture and procedures

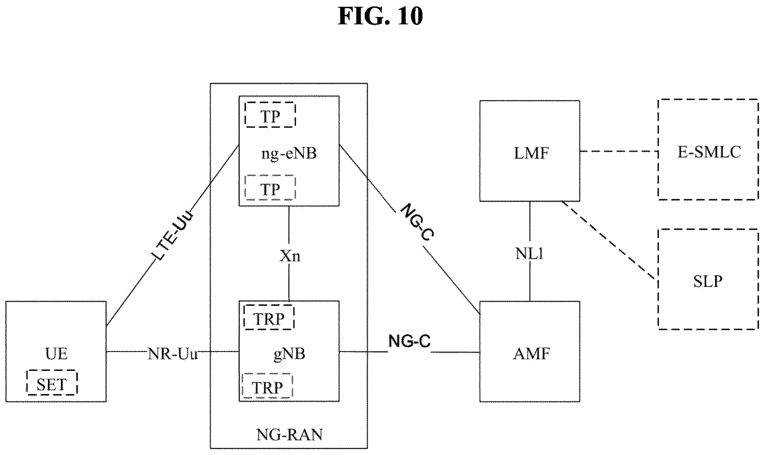

FIG. 10 illustrates a positioning structure of a next generation (NG) radio access network (RAN). The NG RAN may be referred to as a NR RAN or 5G RAN.

An AMF may receive a request for location services related to a specific target UE from other entities (e.g., gateway mobile location centre (GMLC) or UE) or may decide to initiate the location services itself on behalf of the specific target UE (e.g., in the case of IP multimedia subsystem (IMS) emergency calls). Subsequently, the AMF may forward the location service request to an LMF. The LMF may process the location service request, where processing the location service request may include transmitting assistance data to the target UE for UE-based and/or UE-assisted positioning and/or positioning of the target UE. The LMF transmits location service results (e.g., location estimates for the UE) to the AMF. When the location services are requested by other entities (e.g., GMLC or UE), the AMF transmits the location service results to the other entities.

An NG-RAN node may control TRPs/TPs such as RRM or DL-PRS only TPs to support a PRS-based terrestrial beacon system (TBS).

The LMF may be connected to an enhanced serving mobile location centre (E-SMLC) to access universal terrestrial radio access network (UTRAN) information.

The LMF can be connected to a secure user plane location (SUPL) location platform (SLP), which is responsible for positioning relative to the user plane.

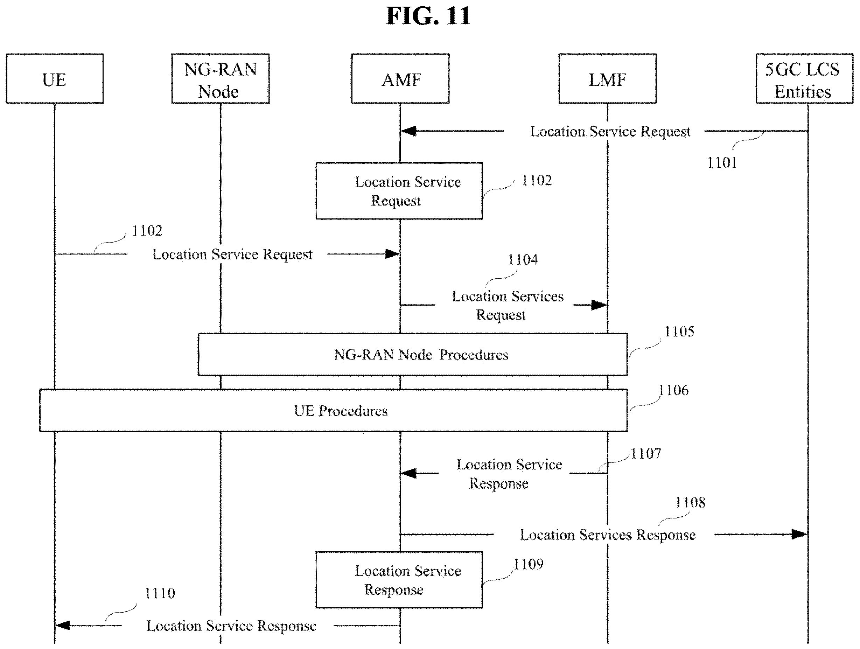

FIG. 11 illustrates an example of location services supported in a NG-RAN.

When a UE is in a connection management idle (CM-IDLE) state, if an AMF receives a location service request, the AMF performs a network trigger service request to configure signaling for a connection to the UE and allocation of a specific serving gNB/ng-eNB. In FIG. 11, it is assumed that the UE is in the connected mode.

Location service requests for the UE may be triggered, and the requests for the UE may be one of steps 1101, 1102, and 1103. For example, an entity in a 5GC such as a GMLC may request location services (e.g., positioning) for a target UE from a serving AMF (1101). Alternatively, the serving AMF may trigger location services (e.g., to find the UE for emergency calls) for the target UE itself (1102). Further, the UE may request location services (e.g., positioning or assistance data transfer) from the serving AMF at the NAS level (1103).

The AMF forwards the location service request to an LMF (1104).

The LMF provides services in the NG-RAN to acquire location measurements or assistance data and initiates a positioning procedure with a neighboring ng-eNB/gNBs (1105).

(Instead of or additionally to step 1105) The LMF initiates the positioning procedure with the UE to obtain location estimates or positioning measurements or transmit location assistance data to the UE (1106).

The LMF provides a location service response to the AMF (1107) (e.g., success or failure and location estimates for the UE if obtained).

(In step 1101) The AMF provides the location service response to the 5GC entity (1108) (e.g., location estimates for the UE).

(In step 1102) The AMF supports the services triggered in step 1102 based on the location service response received in step 1107 (1109) (e.g., providing location estimates related to emergency calls to the GMLC).

(In step 1103) The AMF provides the location service response to the UE (1110) (e.g., location estimates for the UE).

## SRS (Sounding Reference Signal) for Positioning

In Rel. 15 NR systems, periodic, aperiodic, and semi-persistent Rel. 15 SRSs may be transmitted for UL relative time of arrival (UL RTOA), UL SRS-RSRP, and UL-AOA measurements at the BS, thereby supporting UL TDOA and UL AOA.

In Rel. 16/17 NR systems, periodic, aperiodic, and semi-persistent SRSs for positioning may be transmitted for UL RTOA, UL SRS-RSRP, UL-AOA, and gNB Rx-Tx time difference measurements at the BS, thereby supporting for UL TDOA, UL AOA, and multi-RTT.

To prevent confusion between the Rel. 15 SRS and SRS for positioning, the SRS for positioning will be referred to as an SRS-p. Unless otherwise specified, the SRS may be interpreted to mean the SRS-p in the newly proposed methods in this specification.

If a higher layer parameter SRS-PosResource is configured for the SRS (i.e., SRS-p) and a higher layer parameter SpatialRelationInfoPos is configured, the ID of a configuration field of a reference RS is provided. The reference RS may be an SRS configured by the higher layer parameter SRS-Resource or SRS-PosResource, a CSI-RS, an SS/PBCH block, a DL PRS of the serving cell, or a DL PRS configured in the SS/PBCH block.

The UE is not expected to transmit multiple SRS resources with different spatial relationships on the same OFDM symbol.

If the higher layer parameter SpatialRelationInfoPos is not configured, the UE may use either a fixed spatial domain transmission filter or a different spatial domain transmission filter to transmit the SRS-p configured by the higher layer parameter SRS-PosResource across multiple SRS resources.

In the RRC_CONNECTED mode, the UE transmits the SRS-p configured by the higher layer parameter SRS-PosResource within an active UL BWP.

Only one RS source is provided for the higher layer parameter SpatialRelationInfoPos provided for each SRS-p resource.

In the case of operation on the same carrier, if the SRS-p conflicts with a scheduled PUSCH, the SRS-p is dropped on symbols where the collision occurs.

The UE does not expect that SRS-PosResource will be configured on the carrier of the serving cell with a slot format consisting of DL/UL symbols that are not configured for PUSCH/PUCCH transmission.

Depending on UE capabilities, SRS-p resources associated with an initial UL BWP may be configured, and the SRS-p resources are transmitted within the initial UL BWP in the RRC_INACTIVE mode with the same CP and SCS as configured for the initial UL BWP. Depending on UE capabilities, SRS-p resources for positioning may be configured outside the initial BWP in the RRC_INACTIVE mode, and a frequency location, bandwidth, SCS, and CP length may be configured for SRS-p transmission. The SRS-p resources configured outside the initial BWP in the RRC_INACTIVE mode are configured in the same bandwidth and CC as the initial UL BWP.

## ISAC (Integrated Sensing and Communication)

Various methods for using wireless sensing are being widely discussed in recent wireless communication systems. In general, the conventional radar technology may be considered for the purpose of wireless sensing. However, there may be constraints associated with radar technology for sensing, as it is specialized for sensing and may not consider the characteristics of communication. Additionally, separate devices may be required for transmitting and receiving nodes to transmit and receive signals for wireless sensing. To address these issues, methods for using wireless sensing in wireless communication systems that support cellular networks, such as 5G and/or next-generation 6G, are actively being researched. For example, these methods include integrated sensing and communication (ISAC) or joint communication and sensing (JCAS).

In 3GPP standardization, studies for supporting ISAC in 5G/6G have been initiated. According to TR 22.837 published by 3GPP SA1 WG, wireless sensing is defined as a technology that uses radio waves to measure a distance, angle, or instantaneous velocity for the purpose of acquiring information on the environment and/or surrounding objects. A scenario where sensing and communication share the same frequency band and hardware is being considered. In addition, methods of sharing or reusing radio waves intended for communication (e.g., RSs for communication such as an SSB, DMRS, CSI-RS, and/or SRS) for radio waves for sensing or methods of designing separate radio waves for wireless sensing may also be considered.

In general, wireless sensing supported in ISAC involves a process where signals transmitted from the transmitter are reflected off a target object and received by the receiver. Depending on the relationship between the transmitter and receiver, different sensing modes may be defined. Based on whether the transmitter and receiver are matched, a case where the transmitter and receiver are matched may be defined as a mono-static sensing mode, and a case where the transmitter and receiver are not matched may be defined as a bi-static sensing mode.

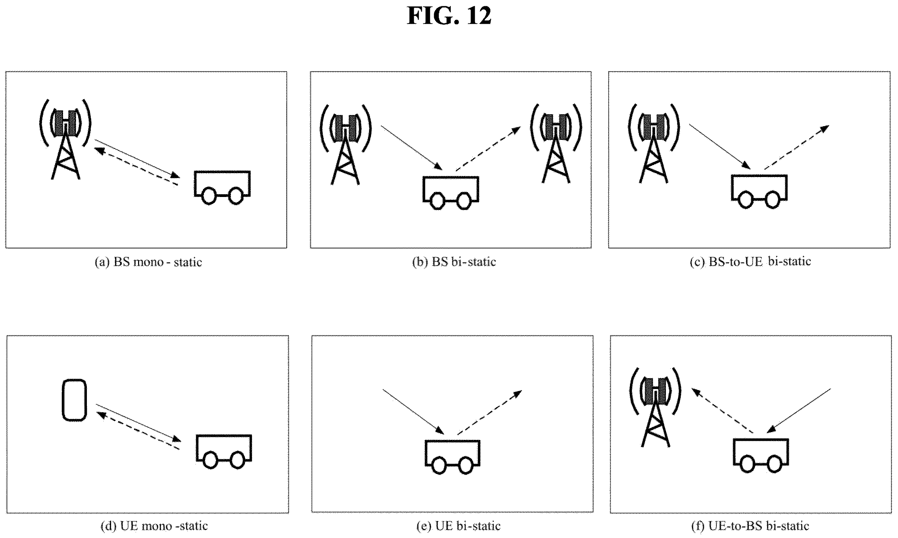

FIG. 12 illustrates examples of wireless sensing modes supported in ISAC.

Referring to FIG. 12, considering the transmission and reception operations in the 3GPP standard and the nodes participating therein, sensing modes may be broadly categorized as follows.

(a) BS mono-static sensing mode: A BS that transmits a radio wave receives a reflected signal.
(b) BS-to-BS bi-static sensing mode: Another BS receives a reflected signal of a radio wave transmitted by a specific BS.
(c) BS-to-UE bi-static sensing mode: A UE receives a reflected signal of a radio wave transmitted by a BS.
(d) UE mono-static sensing mode: A UE that transmits a radio wave receives a reflected signal.
(e) UE-to-UE bi-static sensing mode: Another UE receives a reflected signal of a radio wave transmitted by a specific transmitting UE.
(f) UE-to-BS bi-static sensing mode: A BS receives a reflected signal of a radio wave transmitted by a transmitting UE.

In addition to the six use cases described above, a sensing mode including multiple transmitting/receiving nodes may be referred to a multi-static sensing mode.

The application of wireless sensing through ISAC/JCAS is being considered in various scenarios. Generally, wireless sensing is considered for the purpose of acquiring information on a target with no communication module (or independent of communication modules). For example, considerable scenarios may be broadly divided into three scenarios.

(1) Object detection and tracking: This scenario aims to detect target objects or people and track location information. For example, the following scenarios: intrusion detection in indoor/outdoor environments, tracking the position of an unmanned aerial vehicle (UAV) or automated guided vehicle (AGV), and supporting autonomous driving may be considered.
(2) Environment monitoring: This scenario aims to collect information on the surrounding environment of transmitting/receiving nodes. For example, the following scenarios: rainfall observation and flood detection may be considered.
(3) Motion monitoring: This scenario aims to detect the motion of a target. For example, scenarios for distinguishing human movements or gestures may be considered.

The performance metrics and levels required for each of the above scenarios may vary and differ from one another. To design suitable ISAC/JCAS for the service quality required for each scenario, various key performance requirements need to be considered. In the 3GPP standard, TS 22.137, key performance requirements required for each service scenario are defined as follows: positioning estimation accuracy, velocity estimation accuracy, reliability (confidence level), sensing resolution, missed detection probability, false alarm probability, maximum sensing service delay, and refreshing rate. The required levels for each key performance requirement may vary depending on the service scenario.

**SRS configuration for multiple cells in inactive mode**

Hereinafter, SRS configurations capable of being used by UEs in the RRC inactive state across multiple cells and procedures related thereto will be described. The proposals to be described below may also be applicable to the aforementioned ISAC environment.

While the present disclosure focuses on transmission of an SRS for positioning (hereinafter referred to as SRS-p) performed by a UE in the inactive state based on UL positioning in 3GPP NR, the proposed methods are not limited thereto and may generally be applicable to common positioning techniques where positioning is performed based on RSs transmitted by UEs, including UL positioning operations performed by a UE in the connected state. The proposed methods may be applied to all types of transmission and reception methods and positioning techniques expected by both the BS and UE.

The methods proposed in the present disclosure may be implemented independently without additional combinations or implemented in a combined form by combining one or more methods. Some of the terms, symbols, sequences, and so on used herein may be replaced with other terms, symbols, sequences, and so on.

In NR, UL positioning techniques based on SRS transmission by the UE are supported. In particular, the configuration of an SRS for positioning (SRS-p) may be separately configured and indicated. In addition, methods by which a plurality of TRPs receive an SRS-p transmitted by the UE and perform positioning based on the SRS-p are supported. In Rel-17, SRS-p transmission in the inactive state to achieve power-saving benefits is introduced by supporting UL positioning of the UE in the inactive state. To this end, the UE receives configuration information on an SRS-p to be used in the inactive state via an RRC release message and transmits the SRS-p based on the configuration information and instructions.

The SRS-p configuration of the UE in the inactive state, which is supported based on the current Rel-17 NR standard, may only be supported through the RRC release message described above. In this case, it is assumed that that the UE operates under the condition of maintaining camp-on within the serving cell where the UE obtains the RRC release message. If the UE has mobility and encounters a situation where the validity conditions for the configuration information on the SRS-p that the UE is capable of transmitting in the inactive state are not satisfied (e.g., when the UE moves to a different cell), the UE may no longer be able to perform the SRS-p transmission based on the stored SRS-p configuration information. If the UE desires to continue UL positioning, the UE needs to perform the RRC connection process again to acquire new SRS-p configuration information. The SRS-p reconfiguration process based on entry into the connected state induces power consumption at the UE.

In Rel-18 NR, positioning enhancements are being discussed to meet the requirements of UEs aiming for low power high accuracy positioning (LPHAP). To this end, power-saving techniques are being discussed to meet the target battery life requirement of the UE in the inactive state, and as one of the power-saving techniques, enhancement methods for the SRS-p are being proposed. For example, to reduce power consumption at the UE due to the above-described SRS-p reconfiguration process, a method of allowing SRS-p configuration information configured in a specific cell to be maintained and used within the range of multiple cells (hereinafter referred to as SRS-p for multiple cell) may be considered.

When the UE has mobility, the distance from the UE to the BS, which receives the SRS-p, may vary. If the UE moves beyond a certain range, there may be a situation where timing advance (TA) conditions for receiving the SRS-p are not satisfied at a TRP that expects to receive the SRS-p. In particular, if configuration information on a single SRS-p is allowed across a plurality of cells, situations where suitable TA conditions are not met due to the long travel distance of the UE may occur more frequently. According to the current NR Rel-17 standard, the UE may receive TA validation and RSRP reference configuration information based on configuration information on an SRS-p available in the inactive state. Based on the information, the UE may perform the following operations: maintaining SRS-p transmission and power control. Similar to SRS-p configuration information for other UEs in the inactive state, the current standard does not support a procedure for reconfiguring TA and RSRP-related parameters during the inactive state.

To prevent cases where SRS-p resources need to be reconfigured because TA validation conditions are not satisfied when an SRS-p for multiple cells is supported, a method of increasing the size of a positioning area where the SRS-p for multiple cells is capable of being applied may be considered. To prevent invalidity due to dissatisfaction with the RSRP condition, a method of simply extending the length of a TA validation timer such that the TA is maintained for a longer period or a method of configuring a sufficiently large value for the RSRP threshold may be used. However, if the TA validation conditions are relaxed, significant changes in the TA may occur due to the UE mobility, which leads to a phenomenon where the TA conditions for SRS-p reception are not satisfied in some cells (e.g., delays exceeding the CP length occur). This may cause a decrease in the number of cells where the SRS-p is measured, resulting in positioning failures or performance degradation. On the other hand, if the size of the positioning area where the SRS-p for multiple cells is capable of being applied is reduced for the purpose of preventing the TA issues, that is, if the TA validation timer is set to a shorter duration or if the invalidity condition based on the RSRP threshold is strengthened, a time or space range in which configuration information on the SRS-p for multiple cells is maintained may decrease, leading to an increase in UE power consumption for reconfiguring the SRS-p.

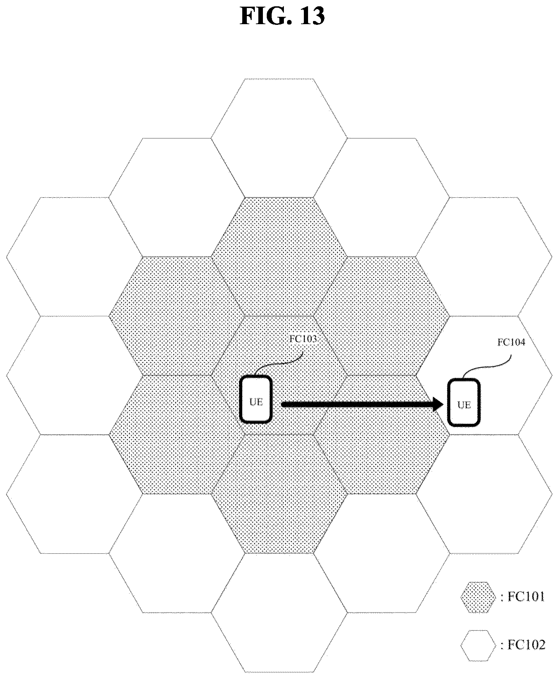

FIG. 13 illustrates an example of an SRS-p configuration for multiple cells.

In FIG. 13, cells in a first region (FC101) are cells where configuration information on an SRS-p for multiple cells is capable of being valid, while cells in a second region (FC102) are cells where the configuration information on the SRS-p for multiple cells is not valid. When a UE (FC103) is located in the first region where the configuration information on the SRS-p for multiple cells is capable of being valid, the UE may perform SRS-p transmission while maintaining the configuration information on the SRS-p. On the other hand, a UE (FC104) that moves to the second region where the configuration information on the SRS-p for multiple cells is not valid may not perform SRS-p transmission based on the configuration information on the SRS-p for multiple cells. When the scope of the first region (FC101) is expanded, it may be advantageous in terms of UE power consumption. However, issues may arise due to the lack of strict management of the TA. On the contrary, if the scope of the second region (FC102) is expanded, the UE may be able to perform SRS-p transmissions while satisfying/maintaining TA validation conditions, but the UE may need to reconfigure the SRS-p frequently.

To address these issues, proposed are methods of supporting an SRS-p for multiple cells stably in consideration of the UE ability to maintain the inactive state and the UE mobility when the UE is configured with an SRS-p configuration for multiple cells for the inactive state and intends to perform SRS-p transmission based on the SRS-p configuration. Hereinafter, the operations of the BS and UE required to support UE operations related to an SRS-p for multiple cells for LPHAP purposes when the UE is in the inactive state as well as signaling therefor will be described.

## [Proposal 11 Reconfiguration/update of SRS configuration for multiple cells based on RA procedure

Hereinafter, UE requests based on a RA procedure when TA validation conditions for an SRS-p for multiple cells are not met as well as BS and UE operations related thereto will be described. The RA procedure in Proposal 1 may be triggered based on that the TA validation conditions are not satisfied.

After the UE is configured with the SRS-p for multiple cells, the UE determines whether the transmission conditions of the configured SRS-p for multiple cells are satisfied, based on the TA validation conditions. If satisfied, the UE may proceed with the transmission of the SRS-p for multiple cells. If the TA validation conditions are not satisfied, the UE may perform a procedure for the reuse or (re)configuration/update of the SRS-p for multiple cells according to the methods described below.

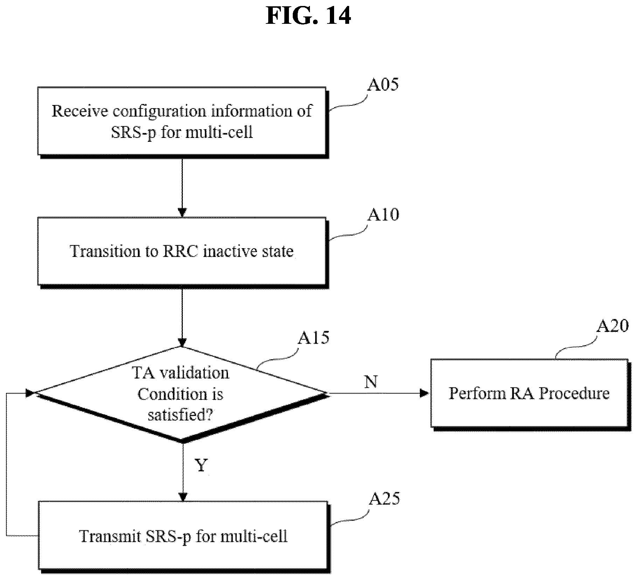

Referring to FIG. 14, the UE may receive configuration information on the SRS-p for multiple cells (A05). The configuration information on the SRS-p for multiple cells may be received through RRC signaling. For example, the configuration information on the SRS-p for multiple cells may be received via an RRC release message.

The UE may transition from the RRC connected state to the RRC inactive state (A10).

The UE may determine whether the TA validation conditions are configured while the UE is in the RRC inactive state (A15). For example, the TA validation conditions may be configured based on RRC parameters obtained while the UE receives the configuration information on the SRS-p for multiple cells (A05). For example, the TA validation conditions may be configured based on the RRC parameters received via an RRC release message. For example, the RRC parameters constituting the TA validation conditions may include at least one of inactivePosSRS-RSRP-ChangeThreshold and inactivePosSRS-TimeAlignmentTimer in the RRC release message. Table 3 excerpts descriptions of the parameters inactivePosSRS-RSRP-ChangeThreshold and inactivePosSRS-TimeAlignmentTimer defined in NR standard document TS 38.331.

[Table 3]

| |
|---|
| inactivePosSRS-RSRP-ChangeThreshold<br>RSRP threshold for the increase/decrease of RSRP for time alignment validation as specified in TS 38.321 [3]. |

As a specific example regarding whether the TA validation conditions are satisfied, the UE measures RSRP with respect to a configured pathloss reference at the time of receiving the configuration information on the SRS-p for multiple cells and stores the measured RSRP value. The stored RSRP value may be updated to RSRP measured when the UE receives a timing advance MAC CE for the operation of inactivePosSRS-TimeAlignmentTimer or when the UE receives a timing advance command or absolute timing advance command through the RA procedure. Subsequently, the UE may determine the TA as valid if the RSRP value measured at a specific point in time falls within the range of increase or decrease determined by inactivePosSRS-RSRP-ChangeThreshold with respect to the stored RSRP value and if inactivePosSRS-TimeAlignmentTimer does not expire.

If it is determined based on the TA validation conditions that the TA is valid, the UE may transmit the SRS-p for multiple cells in the RRC inactive state (A25).

If it is determined based on the TA validation conditions that the TA is invalid, the UE may stop the transmission of the SRS-p for multiple cells and perform the RA procedure (A20). The BS and UE may exchange information on the SRS-p for multiple cells (reconfiguration/update) through the RA procedure while in the RRC inactive state. As described above, the UE may reconfigure/update the SRS-p for multiple cells while maintaining the RRC inactive state. That is, the UE may reconfigure/update the SRS-p for multiple cells without returning to the RRC connected state. Since the SRS-p for multiple cells is reconfigured/updated through the RA procedure, the UE may continue to operate in the RRC inactive state without transitioning to the RRC connected state even after the completion of the RA procedure.

As a specific example, if there are separate RACH resources allocated to the UE (e.g., RA preamble) for the purpose of signaling the invalidity of the transmission of the SRS-p for multiple cells (or allocated to the UE for multiple purposes including this purpose), the UE may perform a contention-free random access (CFRA) operation where the UE transmits msg1 using related RACH resources. Subsequently, based on information received in msg1, the BS may transmit msg2 (i.e., RAR). Depending on the information contained in the RAR, the UE may proceed with the subsequent operations instructed by the BS.

As another specific example, if there are no separate RACH resources allocated to the UE (e.g., RA preamble) for the purpose of signaling the invalidity of the transmission of the SRS-p for multiple cells (or allocated to the UE for multiple purposes including this purpose), the UE may perform a contention-based random access (CBRA) operation. Subsequently, the UE and BS perform the RA procedure by exchanging msg1 and msg2. Upon successfully receiving msg2 and confirming the response to msg1, the UE may be configured to inform the intent regarding the purpose of the SRS-p for multiple cells through msg3. Thereafter, based on the information received in msg3, the BS may transmit msg4. Depending on the information contained in msg4, the UE may proceed with the subsequent operations instructed by the BS.

As subsequent UE operations instructed by msg2 or msg4, the BS may indicate one of the following options to the UE.

- Option 1: The BS may instruct the UE to reuse the previously configured SRS-p for multiple cells. In this case, the UE may start using the stored SRS-p for multiple cells after receiving the corresponding information.
- Option 2: The BS may instruct the UE to no longer use the previously configured SRS-p for multiple cells. In this case, the UE may not perform the transmission of the SRS-p for multiple cells after receiving the information. The UE may drop the transmission of the SRS-p for multiple cells or be configured with a new SRS-p or SRS-p for multiple cells after transitioning to the RRC connected state.
- Option 3: The BS may configure or indicate a new SRS-p or SRS-p for multiple cells for the UE. In this case, the UE may receive information on the changed SRS-p or SRS-p for multiple cells through msg2 or msg4.

If option 1 is configured or indicated, the UE may reconfigure the TA validation conditions to extend the use of the SRS-p for multiple cells.

As a specific example, reconfiguring/updating the configuration of the SRS-p for multiple cells may involve changing the state of a TA validation timer and/or parameters related thereto. The UE may (re)start the TA validation timer by applying the value of inactivePosSRS-TimeAlignmentTimer stored at the moment when the UE is configured/indicated with option 1. Alternatively, the UE may be configured/indicated with a new value for inactivePosSRS-TimeAlignmentTimer along with the configuration/indication of option 1. Then, the UE may (re)start the TA validation timer by applying new inactivePosSRS-TimeAlignmentTimer.

As a specific example, reconfiguring/updating the configuration of the SRS-p for multiple cells may involve changing the state of a RSRP threshold and/or parameters related thereto. For example, if the pathloss reference used for RSRP calculation is maintained, the UE may replace the stored reference RSRP value with the RSRP value measured at the time of receiving information in option 1. In this case, the value of the RSRP threshold may be maintained or, if configured/indicated, the UE may start applying a new RSRP threshold value. As another example, when the pathloss reference used for RSRP calculation is maintained, the UE may be configured/indicated with a changed RSRP threshold value, instead of maintaining the stored reference RSRP value. As a further example, when the UE receives information on a change in the pathloss reference used for RSRP calculation, the UE may measure RSRP based on the new pathloss reference and apply the corresponding RSRP threshold value.

**[Proposal 2] Configuration and application of multi-state TA validation**

The present disclosure proposes a structure of TA validation configured with multiple states as well as BS and UE operations related to an SRS-p for multiple cells based on the structure.

For example, the UE may be configured with TA validation configured in multiple stages. In this case, each stage of TA validation is applied sequentially, and the operations of the BS and UE may be defined, configured, or indicated differently depending on each TA validation condition is satisfied or not. As a specific example, the conditions of the multi-state TA validation are distinguished by different parameter values that share the same operational principle, and the stages may be determined accordingly. For example, in the structure of the multi-state TA validation, a TA validation timer may be used as a criterion to determine the TA validation, and different TA validation timer values may be configured for each state. As another example, in the structure of the multi-state TA validation, an RSRP threshold may be used as a criterion to determine the TA validation, and different RSRP threshold values may be configured for each state.

As a specific example, when the UE is configured with an SRS-p for multiple cells and transmits the SRS-p for multiple cells, the UE may be configured to determine the validation conditions of the SRS-p for multiple cells and perform a two-state TA validation operation. To configure the two-state TA validation operation, two-stage TA validation timer parameters: TA-1 and TA-2 may be configured along with two-stage RSRP threshold parameters: RT-1 and RT-2. When the following relationships: TA-1 < TA-2 and RT-1 < RT-2 are established, TA-1 and RT-1 may be set as parameters for first state TA validation, while TA-2 and RT-2 may be set as parameters for the second state TA validation. In this case, a point in time at which the TA validation timer (re)starts, which is used to determine the first state TA validation and second state TA validation, is shared, and a pathloss reference and a reference RSRP value, which is measured and stored as a reference, may also be shared. If the conditions of the first state TA validation are satisfied, i.e., if the TA validation timer of TA-1 is running and if there is a change in the RSRP within the range of RT-1, the UE may continue the transmission of the SRS-p for multiple cells. If the conditions of the first state TA validation are not satisfied but if the conditions of the second TA validation are satisfied, that is, if the TA validation timer of TA-1 expires but the TA validation timer of TA-2 is still active, and furthermore, if there is a change in the RSRP outside the range of RT-1 but within the range of RT-2, the UE may continue the transmission of the SRS-p for multiple cells and, at the same time, request to (re)configure or change the SRS-p for multiple cells. If neither the conditions of the first state TA validation nor conditions of the second state TA validation are satisfied, that is, if both the TA validation timer of TA-1 and the TA validation timer of TA-2 expire, and furthermore, if there is a change in the RSRP outside the range of both RT-1 and RT-2, the UE may stop the transmission of the SRS-p for multiple cells. In this case, if necessary, the UE may request the (re)configuration or modification of the SRS-p for multiple cells. Proposal 1 may be applied to request the (re)configuration or modification of the SRS-p for multiple cells.

**[Proposal 3] (Re)configuration/update of SRS-p for multiple cells based on paging procedure**

Hereinafter, proposed is a method by which the BS indicate to the UE operations for (re)configuring/updating an SRS-p for multiple cells based on a paging procedure (e.g., paging message).

TA validation timer (re)start

For example, the BS may instruct the UE to (re)set a TA validation timer using the paging procedure. Specifically, the BS may transmit information on the ID of the UE in a paging message transmitted over a PDSCH to indicate an extension for the TA validation timer. In this case, the ID information may be a unique UE ID or a separate ID for the purpose of updating the TA validation timer received by the UE from a higher node via higher layer signals (e.g., RRC release message providing SRS-p for multiple cell configuration information). When the UE is scheduled to receive a paging message by monitoring paging occasions (POs) occurring at the cycle of paging DRX/eDRX, if the UE identifies the ID information upon checking the paging message, the UE may decide to (re)start the TA validation timer. If the UE does not receive the scheduling for the paging message or receives the paging message but does not identify the ID information, the UE may maintain the existing TA validation timer.

To this end, the BS may provide the UE with information on the feasibility of supporting the (re)start operation of the TA validation timer as well as ID information used therefor via paging if needed. Subsequently, if the BS intends to instruct the extension of the TA validation timer for a specific UE (or specific ID), the BS may provide relevant information over a paging PDCCH and a PDSCH carrying a paging message expected to be received by the UE.

According to Proposal 3, a higher node (e.g., gNB or location server) may extend the TA validation timer if desired even without a separate request from the UE, which provides an advantage in terms of power consumption because the UE does not need to receive additional channels in the idle/inactive state.

Spatial relation and/or pathloss reference (re)configuration/update

For example, the BS may instruct to (re)configure information on a spatial relation and/or pathloss reference for an SRS-p for multiple cells using a paging procedure. As a specific example, the BS may transmit information on the ID of the UE to (re)configure the spatial relation and/or pathloss reference information in a paging message transmitted over a PDSCH. In this case, the ID information may be a unique UE ID or a separate ID for the purpose of reconfiguring the spatial relation and/or pathloss reference received by the UE from a higher node via higher layer signals (e.g., RRC release message providing SRS-p for multiple cell configuration information). When the UE is scheduled to receive a paging message by monitoring POs occurring at the cycle of paging DRX/eDRX, if the UE identifies the ID information upon checking the paging message, the UE may reconfigure the spatial relation and/or pathloss reference. If the UE does not receive the scheduling for the paging message or receives the paging message but does not identify the ID information, the UE may maintain the existing configuration information.

At least one of the following options may be used to reconfigure the spatial relation and/or pathloss reference information. However, the present disclosure is not limited thereto.

- Option 1: The UE may acquire and use preconfigured spatial relation and/or pathloss reference information, which is configured for each cell ID included in configuration information on the SRS-p for multiple cells (i.e., through RRC release messages). If the UE acquires an indication of reconfiguring the spatial relation and/or pathloss reference through the paging procedure, the UE may reconfigure the spatial relation and/or pathloss reference based on the cell ID where the paging procedure is performed. The proposed options may be advantageous in that the options allow a higher node to configure a proper spatial relation and/or pathloss reference for each cell.
- Option 2: The UE may determine an SSB associated with a PDSCH carrying the received paging message as the spatial relation and/or pathloss reference. The proposed option offers an advantage of avoiding additional signaling overhead.

According to the proposed method, a higher node (e.g., gNB or location server) may control the reception of the SRS-p for multiple cells and the TA validation conditions if the UE is mobile even without a separate request from the UE. At the same time, the proposed method maintains an advantage in terms of power consumption because it does not trigger reception of additional channels when the UE is in the idle/inactive state.

Indication of RA procedure for (re)configuration/update of SRS-p for multiple cells

For example, the BS may indicate a RA procedure for (re)configuring an SRS-p for multiple cells using a paging procedure. As a specific example, the BS may transmit information on the ID of the UE to indicate the RA procedure for the (re)configuration of the SRS-p for multiple cells in a paging message transmitted over a PDSCH. In this case, the ID information may be a unique UE ID or a separate ID for the purpose of (re)configuring the SRS-p for multiple cells received from a higher node (e.g., gNB or location server) via a higher layer signal (e.g., RRC release message providing SRS-p for multiple cell configuration information). When the UE is scheduled to receive a paging message by monitoring POs occurring at the cycle of paging DRX/eDRX, if the UE identifies the ID information upon checking the paging message, the UE may initiate the RA procedure for the (re)configuration of the SRS-p for multiple cells. If the UE does not receive the scheduling for the paging message or receives the paging message but does not identify the ID information, the UE may maintain the existing configuration information on the SRS-p for multiple cells

For the RA procedure for (re)configuring the SRS-p for multiple cells, the RA procedure proposed in Method 1 of the present disclosure may be used. The proposed method may include informing the BS of the purpose of the (re)configuration of the SRS-p for multiple cells during the steps of msg1 or msg3 to distinguish from the conventional RA procedure based on paging message reception and completing the rest of the RA procedure to perform the (re)configuration of the SRS-p for multiple cells.

The proposed method may be beneficial when the amount of information required for the (re)configuration of the SRS-p for multiple cells is extensive, and as a result, it is difficult to provide the information via paging messages.

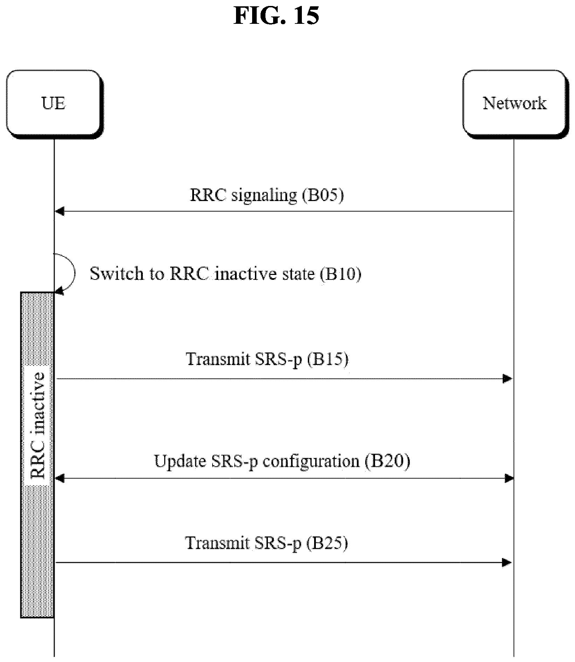

FIG. 15 is a diagram for explaining operations of a UE and network in a wireless communication system according to an embodiment.

Referring to FIG. 15, the UE may receive at least one piece of RRC signaling from the network in the RRC connected state. The at least one piece of RRC signaling may include an SRS-p configuration supporting multiple cells for positioning in the RRC inactive state.

The UE may switch from the RRC connected state to the RRC inactive state (B10).

When a TA is valid, the UE may transmit an SRS-p based on the SRS configuration supporting the multiple cells (B15).

When the TA is invalid, the UE and network may perform a procedure for updating the SRS-p configuration supporting the multiple cells (B20). The UE may perform the update procedure while maintaining the RRC inactive state. The update procedure may include a RA procedure.

The UE may transmit the SRS-p based on the updated SRS-p configuration supporting the multiple cells (B25).

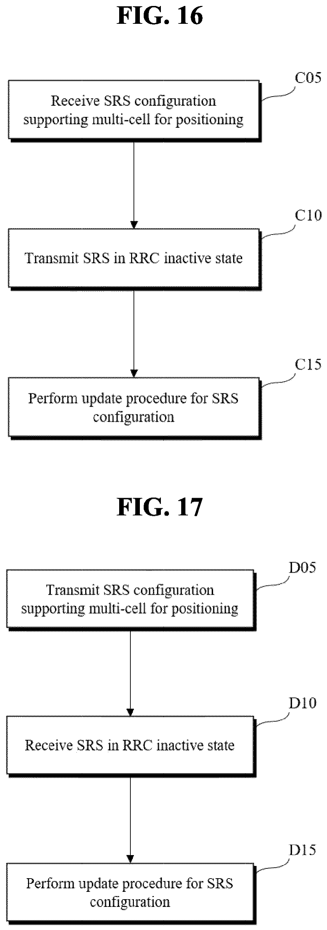

FIG. 16 illustrates a flowchart of a method by which a UE transmits an SRS according to an embodiment.

Referring to FIG. 16, the UE receives an SRS configuration supporting multiple cells for positioning in an RRC inactive state (C05).

The UE may transmit an SRS in the RRC inactive state based on the SRS configuration supporting the multiple cells while a TA is valid (C10).

The UE may perform an update procedure for the SRS configuration supporting the multiple cells based on that the TA is no longer valid (C15). The UE may perform the update procedure while maintaining the RRC inactive state.

The update procedure may be a RA procedure triggered based on that the TA is invalid.

At least one DL link signal received during the RA procedure may include information regarding an updated SRS configuration.

The UE may maintain the RRC inactive state without returning to an RRC connected state even after completion of the RA procedure.

The SRS configuration supporting the multiple cells may be received via an RRC message instructing a transition from an RRC connected state to the RRC inactive state.

The RRC message may include information regarding TA validity determination.

Based on that a first condition among a plurality of conditions related to TA validity determination is not satisfied and that a second condition is satisfied, the UE may perform the update procedure without stopping the SRS transmission.

Based on that both the first condition and the second condition are not satisfied, the UE may stop the SRS transmission and perform the update procedure.

The first condition and the second condition may be different timer values or different RSRP thresholds.

FIG. 17 illustrates a flowchart of a method by which a device having at least one BS receives an SRS according to an embodiment.

Referring to FIG. 17, the device having the at least one BS may transmit an SRS configuration supporting multiple cells for UE positioning in an RRC inactive state (D05).

The device having the at least one BS may receive an SRS from a UE operating in the RRC inactive state based on the SRS configuration supporting the multiple cells while a TA of the UE is valid (D10).

The device having the at least one BS may perform an update procedure for the SRS configuration supporting the multiple cells with the UE based on that the TA is no longer valid (D15).

The device having the at least one BS may perform the update procedure while maintaining the RRC inactive state for the UE

The update procedure may be a RA procedure triggered based on that the TA is invalid.

At least one DL link signal transmitted by the device having the at least one BS during the RA procedure may include information regarding an updated SRS configuration.

The device having the at least one BS may maintain the RRC inactive state for the UE even after completion of the RA procedure.

The SRS configuration supporting the multiple cells may be transmitted via an RRC message instructing a transition from an RRC connected state to the RRC inactive state.

The RRC message may include information regarding TA validity determination.

Based on that a first condition among a plurality of conditions related to TA validity determination is not satisfied and that a second condition is satisfied, the device having the at least one BS may perform the update procedure without stopping the SRS reception.

Based on that both the first condition and the second condition are not satisfied, the device having the at least one BS may stop the SRS reception and perform the update procedure.

The first condition and the second condition may be different timer values or different RSRP thresholds.

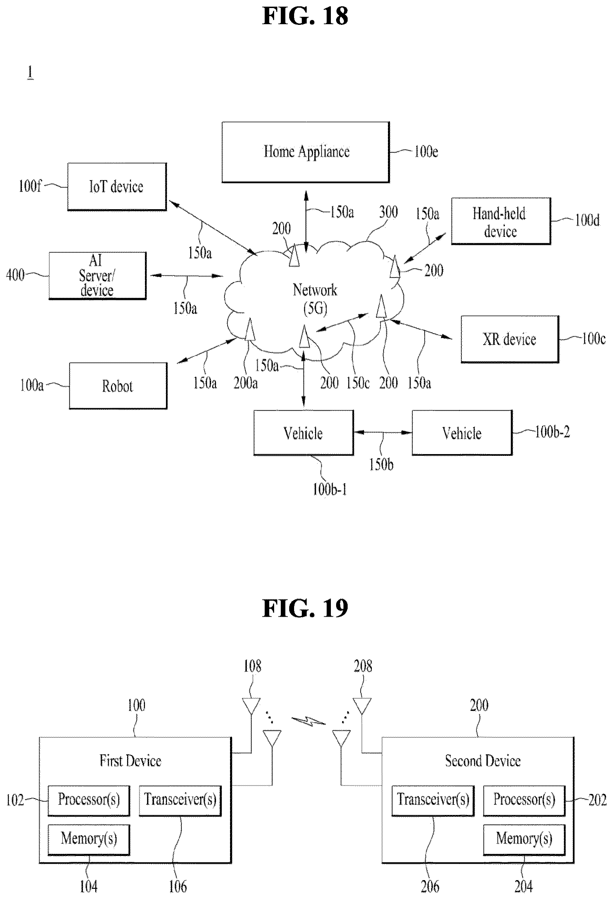

FIG. 18 illustrates a communication system 1 applied to the present disclosure.

Referring to FIG. 18, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The handheld device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 19 illustrates wireless devices applicable to the present disclosure.

Referring to FIG. 19, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 18.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In an embodiment of the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In an embodiment of the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

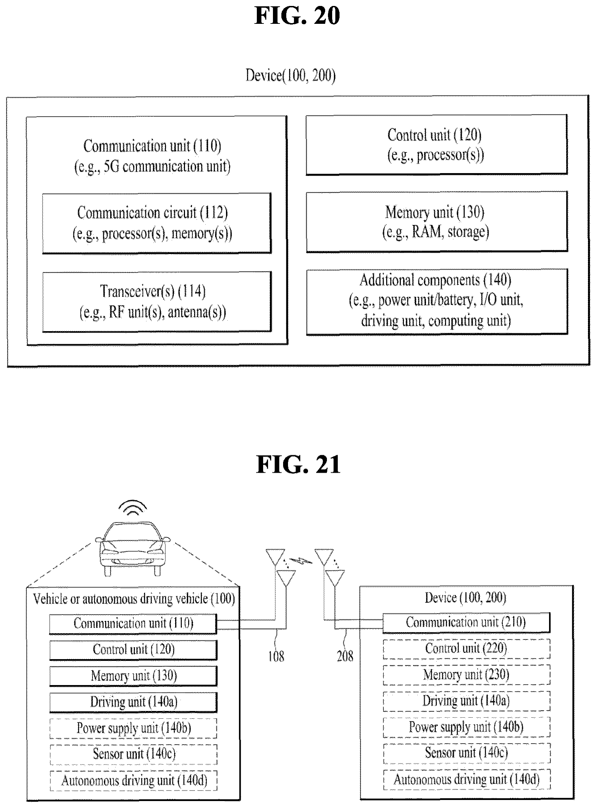

FIG. 20 illustrates another example of a wireless device applied to the present disclosure. The wireless device may be implemented in various forms according to a use-case/service (refer to FIG. 18).

Referring to FIG. 20, wireless devices 100 and 200 may correspond to the wireless devices 100 and 200 of FIG. 19 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 19. For example, the transceiver(s) 114 may include the one or more transceivers 106 and 206 and/or the one or more antennas 108 and 208 of FIG. 19. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 18), the vehicles (100b-1 and 100b-2 of FIG. 18), the XR device (100c of FIG. 18), the hand-held device (100d of FIG. 18), the home appliance (100e of FIG. 18), the IoT device (100f of FIG. 18), a digital broadcast terminal, a hologram device, a public safety device, an MTC device, a medicine device, a fintech device (or a finance device), a security device, a climate/environment device, the AI server/device (400 of FIG. 18), the BSs (200 of FIG. 18), a network node, etc. The wireless device may be used in a mobile or fixed place according to a use-example/service.

In FIG. 20, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 21 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 21, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 20, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The above-described embodiments correspond to combinations of elements and features of the present disclosure in prescribed forms. And, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, an embodiment may be configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### INDUSTRIAL APPLICABILITY

The present disclosure is applicable to UEs, BSs, or other apparatuses in a wireless mobile communication system.

### Claims

1.  A method of transmitting a sounding reference signal (SRS) by a user equipment (UE) in a wireless communication system, the method comprising:

    receiving an SRS configuration supporting multiple cells for positioning in a radio resource control (RRC) inactive state;
    transmitting an SRS in the RRC inactive state based on the SRS configuration supporting the multiple cells while a timing advance (TA) is valid; and
    performing an update procedure for the SRS configuration supporting the multiple cells based on that the TA is no longer valid,
    wherein the UE performs the update procedure while maintaining the RRC inactive state.

2.  The method of claim 1, wherein the update procedure is a random access procedure triggered based on that the TA is invalid, and
    wherein at least one downlink signal received during the random access procedure includes information regarding an updated SRS configuration.

3.  The method of claim 2, wherein the UE maintains the RRC inactive state without returning to an RRC connected state after completion of the random access procedure.

4.  The method of claim 1, wherein the SRS configuration supporting the multiple cells is received via an RRC message instructing a transition from an RRC connected state to the RRC inactive state.

5.  The method of claim 4, wherein the RRC message includes information regarding TA validity determination.

6.  The method of claim 1, wherein based on that a first condition among a plurality of conditions related to TA validity determination is not satisfied and that a second condition is satisfied, the UE performs the update procedure without stopping the SRS transmission.

7. The method of claim 6, wherein based on that both the first condition and the second condition are not satisfied, the UE stops the SRS transmission and performs the update procedure.

8. The method of claim 6, wherein the first condition and the second condition are different timer values or different reference signal received power (RSRP) thresholds.

9. A processor-readable recording medium having recorded thereon a program for performing the method of claim 1.

10. A device for wireless communication, the device comprising:

   a memory configured to store instructions; and
   a processor configured to perform operations by executing the instructions,
   wherein the operations of the processor comprise:

      receiving a sounding reference signal (SRS) configuration supporting multiple cells for positioning in a radio resource control (RRC) inactive state;
      transmitting an SRS in the RRC inactive state based on the SRS configuration supporting the multiple cells while a timing advance (TA) is valid; and
      performing an update procedure for the SRS configuration supporting the multiple cells based on that the TA is no longer valid,
      wherein the device performs the update procedure while maintaining the RRC inactive state.

11. The device of claim 10, further comprising:

   a transceiver,
   wherein the device is a user equipment (UE) operating in a wireless communication system.

12. The device of claim 10, wherein the device is a processing device configured to control a user equipment (UE) operating in a wireless communication system.

13. A method of receiving a sounding reference signal (SRS) by at least one base station (BS) in a wireless communication system, the method comprising:

      transmitting an SRS configuration supporting multiple cells for user equipment (UE) positioning in a radio resource control (RRC) inactive state;
      receiving an SRS from a UE operating in the RRC inactive state based on the SRS configuration supporting the multiple cells while a timing advance (TA) of the UE is valid; and
      performing an update procedure for the SRS configuration supporting the multiple cells with the UE based on that the TA is no longer valid,
      wherein the at least one BS performs the update procedure while maintaining the RRC inactive state for the UE.

14. A processor-readable recording medium having recorded thereon a program for executing the method of claim 13.

15. A device having at least one base station (BS), the device comprising:

   at least one memory configured to store instructions; and
   at least one processor configured to perform operations by executing the instructions,
   wherein the operations of the at least one processor comprise:

      transmitting a sounding reference signal (SRS) configuration supporting multiple cells for user equipment (UE) positioning in a radio resource control (RRC) inactive state;
      receiving an SRS from a UE operating in the RRC inactive state based on the SRS configuration supporting the multiple cells while a timing advance (TA) of the UE is valid; and
      performing an update procedure for the SRS configuration supporting the multiple cells with the UE based on that the TA is no longer valid,
      wherein the device performs the update procedure while maintaining the RRC inactive state for the UE.

EP 4 668 641 A1

# FIG. 1

Initial Cell Search — PSS/SSS & [DLRS] & PBCH — S11

System Information Reception — PDCCH/PDSCH (BCCH) — S12

Random Access Procedure — PRACH — S13, PDCCH/PDSCH — S14, PRACH — S15, PDCCH/PDSCH — S16

General DL/UL Tx/Rx S18 — PDCCH/PDSCH — S17, PUSCH/PUCCH
- DL/UL ACK/NACK
- UE CQI/PMI/Rank Report using PUSCH and PUCCH

# FIG. 2

One Frame (10ms)

Half-Frame (5ms)    Half-Frame (5ms)

Subframe 0 (1ms) ...... Subframe 4 (1ms)    Subframe 5 (1ms) ...... Subframe 9 (1ms)

Subframe (1ms)

15KHz — Slot (14 symbols) — 1ms

30KHz — Slot 0 (14 symbols)    Slot 1 — 500us

60KHz — Slot 0 (14 symbols)    Slot 1    Slot 2    Slot 3 — 250us

120KHz — Slot 0 (14 symbols)    Slot 1    Slot 2    Slot 3    Slot 4    Slot 5    Slot 6    Slot 7 — 125us

# FIG. 3

Resource grid

A carrier
(up to 3300 subcarriers, i. e., 275 RBs)

A BWP

1 RB = 12 subcarriers

1 RE

1 subcarrier

1 symbol

# FIG. 4

# FIG. 5

# FIG. 6

UL grant-to-PUSCH offset (K2)

| PDCCH | | | | | PUSCH | | |

# FIG. 7

Reference Source

GNSS signals (B)

LPP

Measurements(A,B or A+B) or Location

Assistance Data

Target Device

UE/SET

Location server

E-SMLC/SLP/LMF

radio signals (A)

- E-CID Location Information Transfer
- OTDOA Information Transfer
- Reporting of General Error Situations

NRPPa

Reference Source

ACCESS NODE / BS / TS / NG-RAN

# FIG. 8

# FIG. 9

(a)

(b)

# FIG. 10

EP 4 668 641 A1

# FIG. 11

# FIG. 12

(a) BS mono - static

(b) BS bi-static

(c) BS-to-UE bi-static

(d) UE mono -static

(e) UE bi-static

(f) UE-to-BS bi-static

## FIG. 13

EP 4 668 641 A1

# FIG. 14

Receive configuration information of SRS-p for multi-cell — A05

Transition to RRC inactive state — A10

TA validation Condition is satisfied? — A15

N → Perform RA Procedure — A20

Y

Transmit SRS-p for multi-cell — A25

33

# FIG. 15

# FIG. 16

Receive SRS configuration supporting multi-cell for positioning — C05

Transmit SRS in RRC inactive state — C10

Perform update procedure for SRS configuration — C15

# FIG. 17

Transmit SRS configuration supporting multi-cell for positioning — D05

Receive SRS in RRC inactive state — D10

Perform update procedure for SRS configuration — D15

# FIG. 18

1

# FIG. 19

# FIG. 20

Device(100, 200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 21

Vehicle or autonomous driving vehicle (100)
Communication unit (110)
Control unit (120)
Memory unit (130)
Driving unit (140a)
Power supply unit (140b)
Sensor unit (140c)
Autonomous driving unit (140d)

108     208

Device (100, 200)
Communication unit (210)
Control unit (220)
Memory unit (230)
Driving unit (140a)
Power supply unit (140b)
Sensor unit (140c)
Autonomous driving unit (140d)

## INTERNATIONAL SEARCH REPORT

| International application No. |
|---|
| **PCT/KR2024/095152** |

| A. | CLASSIFICATION OF SUBJECT MATTER |
|---|---|
| | **H04L 5/00**(2006.01)i; **H04W 76/27**(2018.01)i; **H04W 74/08**(2009.01)i; **H04B 17/318**(2015.01)i; **H04W 64/00**(2009.01)i |

According to International Patent Classification (IPC) or to both national classification and IPC

| B. | FIELDS SEARCHED |
|---|---|

Minimum documentation searched (classification system followed by classification symbols)

H04L 5/00(2006.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SRS 설정(sounding reference signal configuration), 업데이트(update), RRC 비활성 상태(radio resource control inactive state), 포지셔닝(positioning), 다중 셀(multiple cell), TA(timing advance), 유효(valid)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | INTEL CORPORATION. On Low Power High Accuracy Positioning. R1-2211407, 3GPP TSG RAN WG1 #111. Toulouse, France. 07 November 2022.<br>See sections 1 and 3; and figure 1. | 1-15 |
| Y | CMCC. Discussion on low power high accuracy positioning. R1-2211688, 3GPP TSG RAN WG1 #111. Toulouse, France. 07 November 2022.<br>See section 3.1. | 1-15 |
| A | ZTE. Discussion on low power high accuracy positioning. R1-2211504, 3GPP TSG RAN WG1 #111. Toulouse, France. 07 November 2022.<br>See section 2.4.3. | 1-15 |
| A | CATT. Further discussion on Low Power High Accuracy Positioning. R1-2211206, 3GPP TSG RAN WG1 #111. Toulouse, France. 07 November 2022.<br>See section 3.2. | 1-15 |

| ☑ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 May 2024** | **27 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/095152** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2023-0011025 A1 (ELECTRONICS AND TELECOMMUNICATIONS RESEARCH INSTITUTE) 12 January 2023 (2023-01-12)<br>      See paragraph [0181]. | 1-15 |

Form PCT/ISA/210 (second sheet) (July 2022)

**INTERNATIONAL SEARCH REPORT**
Information on patent family members

International application No.

**PCT/KR2024/095152**

| Patent document cited in search report | Publication date (day/month/year) | Patent family member(s) | Publication date (day/month/year) |
|---|---|---|---|
| US 2023-0011025 A1 | 12 January 2023 | KR 10-2023-0004255 A | 06 January 2023 |

Form PCT/ISA/210 (patent family annex) (July 2022)